# EUROPEAN PATENT APPLICATION

(11) **EP 4 668 871 A1**
(43) Date of publication of application: **24.12.2025**
(21) Application number: 23922795.2
(22) Date of filing: 17.02.2023
(51) Int. Cl.: H04W 48/16, H04W 4/70

(54) **TERMINAL AND WIRELESS COMMUNICATION METHOD**

(71) Applicant: NTT DOCOMO, INC., Tokyo 100-6150 (JP)
(72) Inventor: MIN Tianyang, Tokyo 100-6150 (JP)
(74) Representative: Hoffmann Eitle
(86) International application number: PCT/JP2023/005833
(87) International publication number: WO 2024/171461

(57) **Abstract**

A terminal receives broadcast information including access restrictions to a cell for a first type of terminal of which a capability is reduced compared to a capability of a normal terminal, and a second type of terminal of which a capability is further reduced compared to the capability of the first type of terminal; and the terminal performs cell selection based on content of the access restrictions. The terminal ignores the access restriction for the first type of terminal, when the access restriction for the second type of terminal is indicated using the broadcast information.

## Description

### TECHNICAL FIELD

The preset disclosure relates to a terminal of which a capability is reduced and a radio communication method.

### BACKGROUND ART

The 3rd Generation Partnership Project (3GPP: registered trademark) has prepared a specification for the 5th generation mobile communication system (also referred to as 5G, New Radio (NR), or Next Generation (NG)), and further a specification for a next-generation system referred to as Beyond 5G, 5G Evolution, or 6G is also being prepared.

3GPP Release-17 specifies the support of a terminal of which a capability is reduced (User Equipment, UE). This kind of UE is also referred to as a RedCap UE (reduced UE capability), and can be suitably used for an industrial wireless sensor, video surveillance, and a wearable terminal. The RedCap UE specified in Release-17 has a limited number of receiving antennas to be mounted (may be referred to as RX branch). Therefore, Release-17 specifies the access restriction to a cell for the RedCap UE in consideration of the support at a radio base station (gNB, cell) (Non-Patent Literature 1).

In addition, in 3GPP Release-18, the introduction of a new RedCap UE (may be referred to as eRedCap UE) of which a bandwidth and peak data rate may be further limited is under investigation (Non-Patent Literature 2).

### CITATION LIST

### NON-PATENT LITERATURE

Non-Patent Literature 1: 3GPP TS 38.331 V17.2.0, 3rd Generation Partnership Project; Technical Specification Group Radio Access Network; NR; Radio Resource Control (RRC) protocol specification (Release 17), 3GPP, September 2022
Non-Patent Literature 2: "Revised WID on Enhanced support of reduced capability NR devices", RP-223544, 3GPP TSG RAN Meeting #98-e, 3GPP, December 2022

### SUMMARY OF INVENTION

When the eRedCap UE is introduced, there is a possibility that a normal UE of which a capability is not reduced, the RedCap UE stated in Release-17, and the eRedCap UE stated in Release-18 are present in a mixed state. Specifically, the following are assumed: a scenario in which the normal UE and the eRedCap UE are present in mixed state, and a scenario in which the normal UE, the RedCap UE, and the eRedCap UE are present in a mixed state.

However, in these kinds of scenarios, it is not easy to implement appropriate cell access restriction for the RedCap UE and the eRedCap UE.

Therefore, the following disclosure has been made in view of this kind of situation, and an object of the disclosure is to provide a terminal which can perform appropriate cell access restriction, even when the RedCap UE and the eRedCap UE are present in a mixed state.

One aspect of the present disclosure provides, as a first feature, a terminal (UE 200) including: a reception unit (RRC processing unit 220) that receives broadcast information including access restrictions to a cell for a first type of terminal of which a capability is reduced compared to a capability of a normal terminal, and a second type of terminal of which a capability is further reduced compared to the capability of the first type of terminal; and a control unit (control unit 240) that performs cell selection based on content of the access restrictions, in which the control unit ignores the access restriction for the first type of terminal, when the access restriction for the second type of terminal is indicated using the broadcast information.

One aspect of the present disclosure provides a terminal (UE 200) including: a reception unit (RRC processing unit 220) that receives broadcast information including first access restriction to a cell for a first type of terminal of which a capability is reduced compared to a capability of a normal terminal, and second access restriction to a cell for a second type of terminal of which a capability is further reduced compared to the capability of the first type of terminal; and a control unit (control unit 240) that performs cell selection based on the first access restriction and the second access restriction, in which the control unit (control unit 240) assumes that access to the first type of terminal is also restricted, when access to the second type of terminal is restricted by the second access restriction.

### BRIEF DESCRIPTION OF DRAWINGS

[FIG. 1] FIG. 1 is an overall schematic configuration diagram of a radio communication system 10.
[FIG. 2] FIG. 2 is a functional block diagram of a gNB 100.
[FIG. 3] FIG. 3 is a functional block diagram of a UE 200.
[FIG. 4] FIG. 4 is a diagram showing an example of access restriction according to Operation Example 2.
[FIG. 5] FIG. 5 is a diagram showing an example of access restriction according to Operation Example 4.
[FIG. 6] FIG. 6 is a diagram showing an example of access restriction according to Operation Example 5.
[FIG. 7] FIG. 7 is a diagram showing a configuration example (partial) of an SIB according to Operation Example 2.
[FIG. 8] FIG. 8 is a diagram showing a configuration example (partial) of an SIB according to Operation Example 4.
[FIG. 9] FIG. 9 is a diagram showing a configuration example (partial) of an SIB according to Operation Example 5.
[FIG. 10] FIG. 10 is a diagram showing an example of a hardware configuration of the gNB 100 and the UE 200.
[FIG. 11] FIG. 11 is a diagram showing a configuration example of a vehicle 2001.

### DESCRIPTION OF EMBODIMENTS

An embodiment will be explained below with reference to the accompanying drawings. Note that the same or similar reference numerals have been attached to the same functions and configurations, and the description thereof will be omitted as appropriate.

### (1) Overall schematic configuration of radio communication system

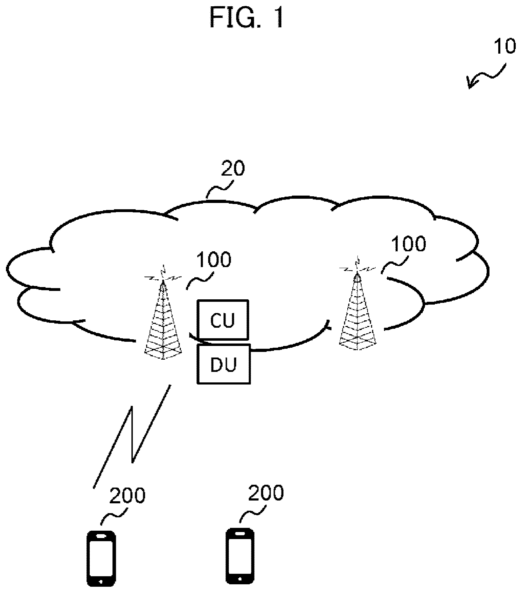

FIG. 1 is an overall schematic configuration diagram of a radio communication system 10 according to the present embodiment. The radio communication system 10 is in accordance with 5G New Radio (NR), and includes a Next Generation-Radio Access Network 20 (hereinafter referred to as NG-RAN 20), and a terminal 200 (User Equipment 200, hereinafter referred to as a UE 200).

The radio communication system 10 may be in accordance with a method referred to as Beyond 5G, 5G Evolution, or 6G.

The NG-RAN 20 includes a radio base station 100 (hereinafter referred to as gNB 100). The specific configuration of the radio communication system 10 including the number of gNBs and UEs is not limited to an example shown in FIG. 1.

The NG-RAN 20 actually includes a plurality of NG-RAN Nodes, specifically gNBs (or ng-eNBs), and is connected to a core network in accordance with 5G (hereinafter referred to as 5GC, not shown). The NG-RAN 20 is connected to an Access and Mobility Management Function (AMF) for providing access and mobility management functions of the UE 200, and a Session Management Function (SMF) for providing session management functions, which are included in a system architecture of 5G. Further, a Unified Data Management/User Data Repository (UDM/UDR) may be connected to an AMF and/or SMF.

The gNB 100 is a radio base station in accordance with NR, and performs radio communication in accordance with NR with the UE 200. The gNB 100 may be constituted by a Central Unit (CU) and a Distributed Unit (DU), and the DU may be separated from the CU and installed at a different geographical location.

The gNB 100 and the UE 200 can support Massive MIMO in which a beam with higher directivity is generated by controlling radio signals transmitted from a plurality of antenna elements, carrier aggregation (CA) in which a plurality of component carriers (CCs) are bundled and used, dual connectivity (DC) in which communication is performed simultaneously between the UE and each of the plurality of NG-RAN Nodes, and the like.

In the present embodiment, a moving range of the UE 200 may be limited to a specific area. Specifically, the moving range of the UE 200 may be limited to one or more specific cells formed by the gNB 100. Alternatively, the UE 200 may be almost stationary, and the moving range may be limited to approximately the same cell.

In this way, a UE of which a moving range is limited may be determined to be in a low mobility state. Further, a UE which is almost stationary, and of which a moving range is limited to approximately the same cell may be determined to be in a stationary state. The stationary state may be included in the low mobility state as one aspect of the low mobility state. Conversely, the low mobility state may be included in the stationary state as one aspect of the stationary state. In addition, the terms low mobility and stationary may be expressed by other synonymous terms, such as motionless, parked, immobilized, stopped, halted, unmoving, and static (the term low mobility will be used in the following).

When the moving range of the UE 200 is limited, the capability of the UE 200 may be reduced. Although there are no particular limitations, the reduced capability may mean that the capability (operation) related to measurement for radio resource management (RRM) is reduced (or may be limited or decreased), for example.

This kind of UE may be referred to as a RedCap UE (reduced UE capability) or the like. The RedCap UE may be interpreted as belonging to a category of a UE used for an industrial wireless sensor, video surveillance, and a wearable terminal, for example.

Alternatively, the capability of the RedCap UE does not necessarily have to be reduced, and the RedCap UE may be interpreted as a UE for Ultra-Reliable and Low Latency Communications (URLLC), or a UE for Internet of Things (IoT). The RedCap UE may be referred to as a specific type of UE.

Meanwhile, a Non-RedCap UE may be interpreted as a UE with normal capability (normal UE, normal terminal), or a UE for enhanced Mobile Broadband (eMBB).

The RedCap UE is specified in 3GPP Release-17 and may have different numbers of receiving antennas to be mounted (may be referred to as RX branch). Specifically, there may be a RedCap UE with one receiving antenna (1 RX branch), and a RedCap UE with two receiving antennas (2 RX branch). However, the number of receiving antennas is not necessarily limited to 1 RX branch and 2 RX branch.

Further, the function (capability) of the RedCap UE may be further reduced. Specifically, the bandwidth and peak data rate may be further limited, compared with the RedCap UE. This kind of RedCap UE may be specified in 3GPP Release-18, and may be referred to as an eRedCap UE (enhanced reduced UE capability) to distinguish the RedCap UE from the RedCap UE specified in Release-17.

In the case of the eRedCap UE, a bandwidth of a baseband (BB) used for transmission and reception of a specific channel may be limited to 5 MHz (generally 20 MHz), and a peak data rate may be further reduced by changing a specific parameter, for example. For the subcarrier spacing (SCS), 15 kHz or 30 kHz may be applied. In the present embodiment, the RedCap UE of which a capability is reduced compared to a capability of a normal terminal may be referred to as a first type of terminal, and the eRedCap UE of which a capability is further reduced compared to the capability of the RedCap UE may be referred to as a second type of terminal.

Further, in the present embodiment, a channel includes a control channel and a data channel. The control channel includes a Physical Downlink Control Channel (PDCCH), a Physical Uplink Control Channel (PUCCH), a Physical Random Access Channel (PRACH), a Physical Broadcast Channel (PBCH), and the like.

Further, the data channel includes a Physical Downlink Shared Channel (PDSCH), a Physical Uplink Shared Channel (PUSCH), and the like.

A reference signal includes a Demodulation reference signal (DMRS), a Sounding Reference Signal (SRS), a Phase Tracking Reference Signal (PTRS), a Channel State Information-Reference Signal (CSI-RS), and the like, and a signal includes a channel and a reference signal. Further, the data may mean data transmitted via a data channel.

### (2) Functional block configuration of radio communication system

Next, a functional block configuration of the radio communication system 10 will be described. Specifically, functional block configurations of the gNB 100 and the UE 200 will be described.

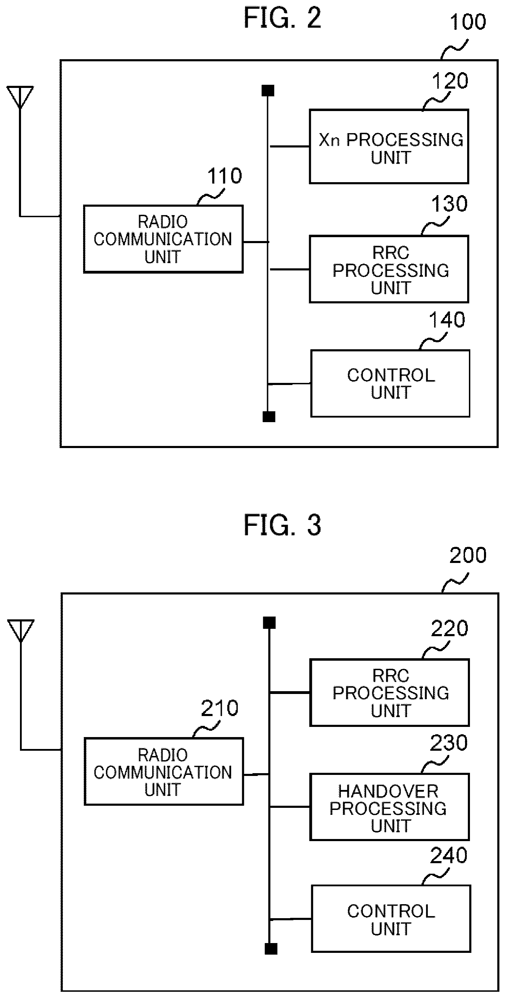

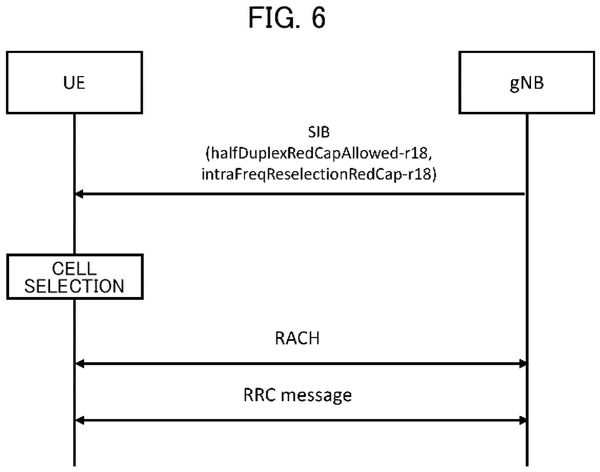

FIG. 2 is a functional block diagram of the gNB 100. FIG. 3 is a functional block diagram of the UE 200. Note that FIGS. 2 and 3 show only main functional blocks relevant to the description of the embodiment, and the gNB 100 and the UE 200 have other functional blocks (for example, a power supply unit). Further, FIGS. 2 and 3 show functional block configurations of the gNB 100 and the UE 200, and please refer to FIG. 6 for the hardware configuration.

### (2.1) gNB 100

As shown in FIG. 2, the gNB 100 includes a radio communication unit 110, an Xn processing unit 120, an RRC processing unit 130, and a control unit 140.

The radio communication unit 110 transmits a downlink signal (DL signal) in accordance with NR. Further, the radio communication unit 110 receives an uplink signal (UL signal) in accordance with NR.

The Xn processing unit 120 processes a message via an Xn interface, which is a kind of interface between Radio Access Network (RAN) nodes. Specifically, the Xn processing unit 120 can transmit and receive a message in accordance with an XnAP (Application Protocol). More specifically, the Xn processing unit 120 may transmit and receive various messages in accordance with the XnAP specified in 3GPP TS38.423.

When the gNB 100 adopts a CU-DU configuration, the Xn processing unit 120 may transmit and receive various messages according to an F1AP specified in 3GPP TS38.473 between CU and DU.

The RRC processing unit 130 performs various processing in a radio resource control layer (RRC). The RRC processing unit 130 can transmit an RRC Reconfiguration to the UE 200, for example. Further, the RRC processing unit 130 can receive, from the UE 200, RRC Reconfiguration Complete, which is a response to the RRC Reconfiguration.

Further, the RRC processing unit 130 may transmit, to the UE 200, broadcast information related to the access restriction for the RedCap UE and the eRedCap UE. Specifically, the RRC processing unit 130 may broadcast, to a target cell, system information (SIB: System Information Block) related to the access restriction.

The SIB which can broadcast the content of the access restriction may be an SIB 1 or another SIB. The content of the access restriction may be a restriction based on the number of receiving antennas (1 RX branch or 2 RX branch) of the RedCap UE and/or eRedCap UE, or a restriction targeting either the RedCap UE or the eRedCap UE, or both.

The access restriction for the RedCap UE stated in 3GPP Release-17 may be referred to as first access restriction, and the access restriction for the eRedCap UE stated in 3GPP Release-18 may be referred to as second access restriction.

The control unit 140 controls individual functional blocks which constitute the gNB 100. In particular, in the present embodiment, the control unit 140 performs control related to the access restriction for the RedCap UE and the eRedCap UE.

Specifically, the control unit 140 can apply the access restriction to the cell (gNB 100), to a specific type of UE (or all types of UE) depending on the capability of the gNB 100, or an accommodating status of the Non-RedCap UE, RedCap UE, and eRedCap UE in a cell.

The access restriction may be applied, assuming a scenario in which the Non-RedCap UE and the eRedCap UE are present in a mixed state in a cell (referred to as scenario A), or a scenario in which the Non-RedCap UE, RedCap UE, and the eRedCap UE are present in a mixed state in a cell (scenario B).

### (2.2) UE 200

As shown in FIG. 3, the UE 200 includes a radio communication unit 210, an RRC processing unit 220, a handover processing unit 230, and a control unit 240. Here, it is assumed that the UE 200 is the eRedCap UE. However, the UE 200 may be both the eRedCap UE and the RedCap UE.

The radio communication unit 210 transmits an uplink signal (UL signal) in accordance with NR. Further, the radio communication unit 210 receives an uplink signal (DL signal) in accordance with NR.

The RRC processing unit 220 performs various processing in the radio resource control layer (RRC). Specifically, the RRC processing unit 220 can transmit and receive a message in the radio resource control layer.

The RRC processing unit 220 can receive an RRC Reconfiguration from a network, specifically, the NG-RAN 20, for example. Further, the RRC processing unit 220 can transmit, to the network, RRC Reconfiguration Complete, which is a response to the RRC Reconfiguration.

The RRC processing unit 220 can receive broadcast information (system information) related to the access restriction. Specifically, the RRC processing unit 220 may receive broadcast information including the access restriction to cells for the RedCap UE and the eRedCap UE. The access restriction may be commonly applied to the RedCap UE and the eRedCap UE. In the present embodiment, the RRC processing unit 220 may constitute a reception unit.

Further, the RRC processing unit 220 may receive broadcast information including the access restriction to a cell for the RedCap UE (first access restriction), and the access restriction to a cell for the eRedCap UE (second access restriction).

The first access restriction may support cellBarredRedCap1Rx-r17, cellBarredRedCap2Rx-r17, halfDuplexRedCapAllowed-r17, intraFreqReselectionRedCap-r17, and the like in an information element (IE) of an RRC layer. The halfDuplexRedCapAllowed-r17 may indicate whether to permit the RedCap UE of a half duplex communication system. The intraFreqReselectionRedCap-r17 may indicate the restriction of selection and reselection of a cell in another frequency band after the access restriction.

The second access restriction may support cellBarredRedCap1Rx-r18, cellBarredRedCap2Rx-r18 (may be provisional name), and the like in the information element (IE) of the RRC layer. Further, the second access restriction may support cellBarredRedCap-r18, and intraFreqReselectionRedCap-r18 (may be provisional name). Like the cellBarredRedCap1Rx-r18 and cellBarredRedCap2Rx-r18, the cellBarredRedCap-r18 may target overall eRedCap, rather than being based on the number of receiving antennas. The intraFreqReselectionRedCap-r18 corresponds to the intraFreqReselectionRedCap-r17, and may indicate the restriction on reselection within a frequency band.

The handover processing unit 230 performs processing related to the handover of the UE 200. Specifically, the handover processing unit 230 can perform handover processing when the UE 200 is the RedCap UE or the eRedCap UE.

The handover processing unit 230 may measure the reception quality (Reference Signal Received Power (RSRP) and the like) of a serving cell and a neighboring cell (may be referred to as peripheral cell), and may perform handover to a cell satisfying a condition such as the reception quality.

Note that the serving cell may be simply interpreted as a cell to which the UE 200 is being connected, but more strictly, in the case of a UE of RRC_CONNECTED for which no carrier aggregation (CA) is configured, only one serving cell is required to constitute a primary cell. In the case of a UE of RRC_CONNECTED formed by using CA, the serving cell may be interpreted as representing a set of one or more cells, including a primary cell and all secondary cells.

The control unit 240 controls each functional block constituting the UE 200. In particular, in the present embodiment, the control unit 240 may perform various controls when the UE 200 is the RedCap UE or the eRedCap UE.

Specifically, the control unit 240 may perform controls according to the number of receiving antennas (1 RX branch/2 RX branch), bandwidth, peak data rate, and the like of the UE 200. That is, in the radio communication system 10, according to the capability such as the number of receiving antennas of the UE 200, at least any of a cell to which handover of the UE 200 is possible, or radio resource management such as measurement and measurement reporting of reception quality may be different.

Further, the control unit 240 may perform cell selection based on the content of the access restriction for the RedCap UE or the eRedCap UE. Specifically, when the access restriction for the RedCap UE or the eRedCap UE is applied, the control unit 240 may stop access to the cell, specifically connection processing in the RRC layer or the like.

When the access restriction for the eRedCap UE is indicated using broadcast information (system information), the control unit 240 may ignore the access restriction for the RedCap UE. Specifically, suppose that the RRC processing unit 220 receives system information including the above-described IE indicating the restriction for the eRedCap UE. In the above case, the control unit 240 may restrict access to the cell, while the control unit 240 may ignore the access restriction for a specific time period, or until an indication to release the restriction is indicated, even if the system information includes the above-described IE indicating the access restriction for the RedCap UE.

Alternatively, the control unit 240 may ignore the access restriction for the RedCap UE, regardless of whether the access restriction for the eRedCap UE is indicated using the broadcast information. That is, when the UE 200 is the eRedCap UE, the control unit 240 may completely ignore the access restriction for the RedCap UE.

Further, the control unit 240 may perform cell selection based on the access restriction for the RedCap UE stated in Release-17 (first access restriction), and the access restriction for the eRedCap UE stated in Release-18 (second access restriction). However, when the access to the eRedCap UE is restricted by the second access restriction, the control unit 240 may assume that the access to the RedCap UE is also restricted. That is, when the access to the eRedCap UE is restricted, the control unit 240 may assume that the same access restriction is also applied to the RedCap UE.

### (3) Operation of radio communication system

Next, an operation of the radio communication system 10 will be described. Specifically, a description will be given regarding operation examples of the UE 200 regarding the access restriction for the RedCap UE and the eRedCap UE as the UE 200.

### (3.1) Assumptions and issues

For the access restriction of the RedCap UE to a cell stated in Release-17, intraFreqReselectionRedCap-r17, which is a new information element (IE), is specified in the system information (SIB 1).

However, in the scenario in which the Non-RedCap UE and the eRedCap UE are present in a mixed state in the cell (scenario A), or in the scenario in which the Non-RedCap UE, the RedCap UE, and the eRedCap UE are present in a mixed state in the cell (scenario B), the problem is how to classify the RedCap UE and/or the eRedCap UE to perform the access restriction.

The following describes operation examples in which intended access restriction for the eRedCap UE (and RedCap UE) can be implemented in the scenarios.

### (3.2) Operation examples

### (3.2.1) Operation Example 1

The eRedCap UE may operate depending on whether there is access restriction to a cell by cellBarredRedCap1Rx-r17 and cellBarredRedCap2Rx-r17. The eRedCap UE does not select the cell during a period when the access restriction is configured (barred), and may select the cell when the access restriction is not configured (Not barred).

### (3.2.2) Operation Example 2

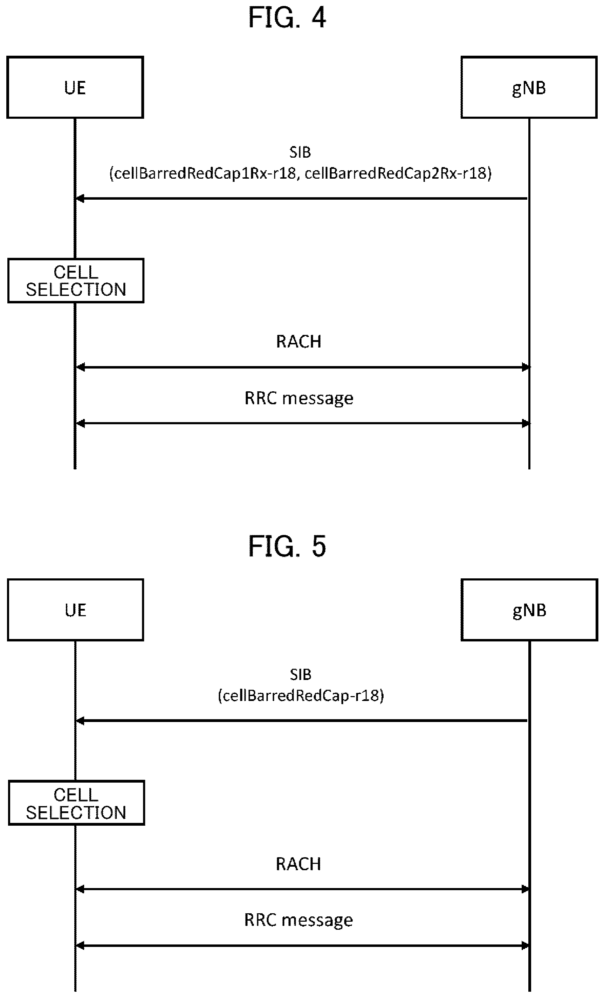

FIG. 4 shows an example of the access restriction according to Operation Example 2. As shown in FIG. 4, the SIB (may be SIB 1 or another SIB, hereinafter the same) may include cellBarredRedCap1Rx-r18 and cellBarredRedCap2Rx-r18, and the eRedCap UE may operate according to the IE.

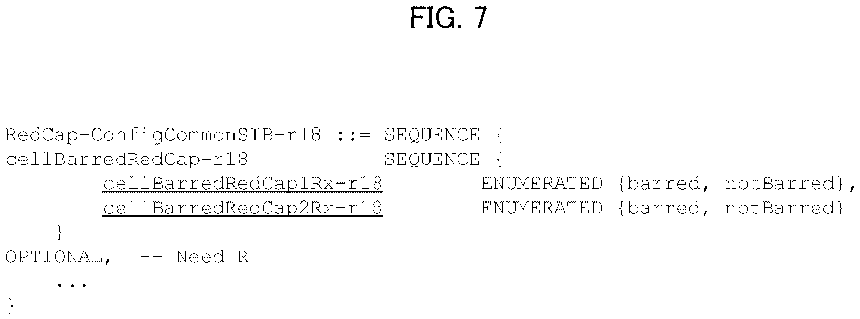

FIG. 7 shows a configuration example (partial) of an SIB according to Operation Example 2. The eRedCap UE may operate depending on whether there is access restriction to a cell by cellBarredRedCap1Rx-r18 and cellBarredRedCap2Rx-r18. The eRedCap UE may not select the cell during a period when there is access restriction (barred), and may select the cell when there is no access restriction (Not barred).

If the cellBarredRedCap1Rx-r18 or cellBarredRedCap2Rx-r18 is configured, the eRedCap UE may ignore the cellBarredRedCap1Rx-r17 and cellBarredRedCap2Rx-r17. If the cellBarredRedCap1Rx-r18 or cellBarredRedCap2Rx-r18 is not configured, the eRedCap UE may operate according to the cellBarredRedCap1Rx-r17 and cellBarredRedCap2Rx-r17.

### (3.2.3) Operation Example 3

The eRedCap UE may operate according to the cellBarredRedCap1Rx-r18 or cellBarredRedCap2Rx-r18. The eRedCap UE may ignore the cellBarredRedCap1Rx-r17 and cellBarredRedCap2Rx-r17, regardless of whether the cellBarredRedCap1Rx-r18 or cellBarredRedCap2Rx-r18 is configured.

### (3.2.4) Operation Example 4

FIG. 5 shows an example of the access restriction according to Operation Example 4. As shown in FIG. 5, an SIB may include the cellBarredRedCap-r18, and the eRedCap UE may operate according to the IE.

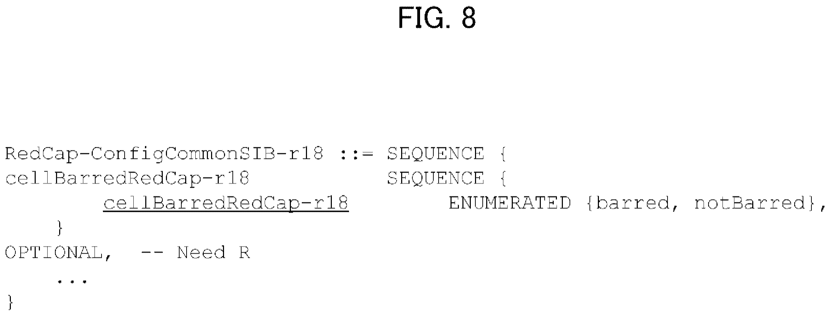

FIG. 8 shows a configuration example (partial) of an SIB according to Operation Example 4. The network (gNB) may control the access restriction by using the cellBarredRedCap-r18, and the cellBarredRedCap1Rx-r17 and cellBarredRedCap2Rx-r17 together.

For example, if the restriction is configured (barred) for the cellBarredRedCap-r18, the cellBarredRedCap1Rx-r17 and cellBarredRedCap2Rx-r17 may be used to control the restriction of the RedCap UE of 1 RX branch and/or 2 RX branch. If no restriction is configured (not barred) for the cellBarredRedCap-r18, the cell may mean that the access restriction is not applied to the eRedCap UE.

### (3.2.5) Operation Example 5

The network (gNB) may perform the access restriction for the eRedCap UE using the halfDuplexRedCapAllowed-r17. Further, the network may perform the access restriction for the eRedCap UE using the intraFreqReselectionRedCap-r17.

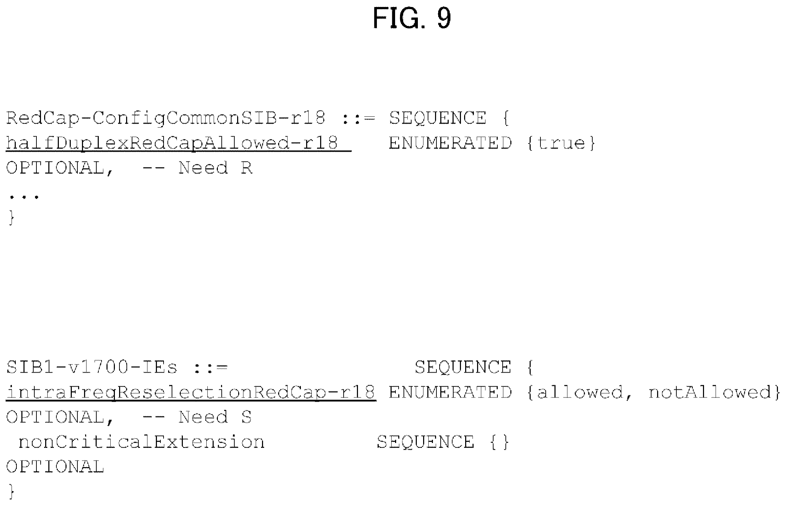

FIG. 6 shows an example of the access restriction according to Operation Example 5. Further, FIG. 9 shows a configuration example (partial) of an SIB according to Operation Example 5. As shown in FIGS. 6 and 9, the network may newly specify halfDuplexRedCapAllowed-r18, and perform the access restriction for the eRedCap UE of Half duplex FDD. In this case, the eRedCap UE may ignore the halfDuplexRedCapAllowed-r17.

In addition, the network may newly specify intraFreqReselectionRedCap-r18, and restrict selection/reselection to another intra-frequency cell, after the access restriction of the eRedCap UE to a cell. In this case, the eRedCap UE may ignore the intraFreqReselectionRedCap-r17.

### (4) Action and effect

According to the above-described embodiment, by using an existing IE for the access restriction for the RedCap UE, and a new IE for the access restriction for the eRedCap UE, it is possible to implement appropriate access restriction according to the intention of the network side, even in a scenario in which the eRedCap UE and another type of UE are present in a mixed state (scenario A or B).

That is, according to the gNB 100 and the UE 200, it is possible to perform appropriate access restriction to a cell, even if the RedCap UE and the eRedCap UE are present in a mixed state.

### (5) Other embodiments

Although an embodiment has been described above, it is obvious to those skilled in the art that the present invention is not limited to the description of the embodiment and that various modifications and improvements thereof are possible.

In the above-described embodiment, the RedCap UE and the eRedCap UE have been described based on the assumption that some capabilities thereof are reduced, for example. However, as described above, the RedCap UE and the eRedCap UE do not necessarily have to have reduced capabilities. The RedCap UE and the eRedCap UE may be interpreted as a UE for Ultra-Reliable and Low Latency Communications (URLLC), or a UE for Internet of Things (IoT). It is sufficient if the RedCap UE and the eRedCap UE are specific types of UEs that can be distinguished from the Non-RedCap UE.

In the above disclosure, terms such as configure, activate, update, indicate, enable, specify, and select may be read interchangeably. Similarly, terms such as link, associate, correspond, and map may be read interchangeably, and terms such as allocate, assign, monitor, and map may be read interchangeably.

In addition, terms such as specific, dedicated, UE-specific, and UE-dedicated may be read interchangeably. Similarly, terms such as common, shared, group-common, UE-common, and UE-shared may be read interchangeably.

The block diagram (FIGS. 2 and 3) used in the description of the above-described embodiment illustrates blocks in units of functions. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining software into the apparatus described above or the plurality of apparatuses described above.

Functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

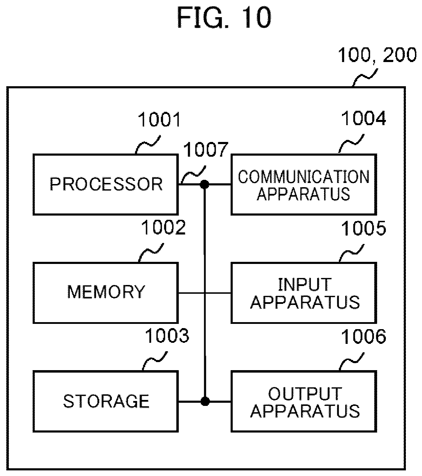

Further, the above-described gNB 100 and UE 200 (the devices) may function as a computer that performs processing of a radio communication method of the present disclosure. FIG. 10 is a diagram illustrating an example of a hardware configuration of the device. As illustrated in FIG. 10, the device may be configured as a computer device including a processor 1001, a memory 1002, a storage 1003, a communication device 1004, an input device 1005, an output device 1006, a bus 1007, and the like.

Furthermore, in the following description, the term "device" can be read as meaning circuit, device, unit, or the like. The hardware configuration of the device may include one or more devices illustrated in the figure or may not include some of the devices.

Each of the functional blocks of the device (FIGS. 2 and 3) is implemented by means of any of hardware elements of the computer device or a combination of the hardware elements.

Each function in the device is realized by loading predetermined software (programs) on hardware such as the processor 1001 and the memory 1002 so that the processor 1001 performs arithmetic operations to control communication via the communication device 1004 and to control at least one of reading and writing of data on the memory 1002 and the storage 1003.

The processor 1001 controls the whole computer by, for example, running an operating system. The processor 1001 may be configured with a0 central processing unit (CPU), which includes interfaces with peripheral apparatus, control apparatus, computing apparatus, a register, and so on.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus." The above recording medium may be a database including the memory 1002 and/or the storage 1003, a server, or any other appropriate medium.

The communication apparatus 1004 is hardware (transmitting/receiving device) for allowing inter-computer communication via at least one of wired and wireless networks, and may be referred to as, for example, a "network device," a "network controller," a "network card," a "communication module," and so on.

The communication apparatus 1004 may be configured to include a high frequency switch, a duplexer, a filter, a frequency synthesizer, and so on in order to realize, for example, at least one of frequency division duplex (FDD) and time division duplex (TDD).

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the device may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling), and other signals or combinations of these. Also, RRC signaling may be referred to as an "RRC message," and can be, for example, an RRC connection setup message, an RRC connection reconfiguration message, and so on.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods, next-generation systems that are enhanced, modified, created, or defined based on these, and the like. A plurality of systems may be combined (for example, a combination of LTE or LTE-A and 5G, and the like) for application.

The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these. According to the above, a case is described in which there is a single network node other than the base station 10. However, a combination of multiple other network nodes may be considered (e.g., MME and S-GW).

Information or signals (information and the like) may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in an embodiment of the present invention may be realized by a value (0 or 1) represented by one bit, by a boolean value (true or false), or by comparison of numerical values (e.g., comparison with a predetermined value).

Each aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) or wireless technologies (infrared, microwave, etc.), at least one of these wired line technologies or wireless technologies is included within the definition of the transmission medium.

Information, a signal, or the like, described in the present specification may be represented by using any of a one of various different technologies. For example, data, an instruction, a command, information, a signal, a bit, a symbol, a chip, or the like, described throughout the present application, may be represented by a voltage, an electric current, electromagnetic waves, magnetic fields, magnetic particle, optical fields, a photon, or a combination thereof.

It should be noted that a term used in the present specification and/or term required for understanding of the present specification may be replaced by a term having the same or similar meaning. For example, a channel and a symbol may be a signal (signaling). Further a signal may also be a message. Further, the component carrier (CC) may be referred to as a carrier frequency, cell, frequency carrier, or the like.

As used in the present disclosure, the terms "system" and "network" are used interchangeably.

Furthermore, the information, parameters, and the like, described in the present disclosure may be expressed using absolute values, relative values from a predetermined values, or they may be expressed using corresponding different information. For example, a radio resource may be what is indicated by an index.

The names used for the parameters described above are not used as limitation. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a "small cell," a "femto cell," a "pico cell," and so on.

A base station can accommodate one or a plurality of (for example, three) cells (also called sectors). When a base station accommodates a plurality of cells, the entire coverage area of the base station can be partitioned into multiple smaller areas, and each smaller area can provide communication services through base station subsystems (for example, indoor small base stations (Remote Radio Heads (RRHs))).

The term "cell" or "sector" refers to part of or the entire coverage area of at least one of a base station and a base station subsystem that provides communication services within this coverage.

In the present disclosure, transmitting information to the terminal by the base station may be referred to as instructing the terminal to perform any control and/or operation based on the information by the base station.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be a device mounted on a moving object or a moving object itself, and so on. The moving object may be a vehicle (for example, a car, an airplane, and the like), may be a moving object which moves unmanned (for example, a drone, an automatic operation car, and the like), or may be a robot

(a manned type or unmanned type). Note that at least one of a base station and a mobile station also includes an apparatus which does not necessarily move during communication operation. For example, at least one of a base station and a mobile station may be an Internet of Things (IoT) device such as a sensor.

Furthermore, the base station in the present disclosure may be interpreted as a mobile station (hereinafter, a user terminal). For example, each aspect/embodiment of the present disclosure may be applied to the structure that replaces a communication between a base station and a mobile station with a communication between a plurality of mobile stations (for example, which may be referred to as "Device-to-Device (D2D)," "Vehicle-to-Everything (V2X)," and the like). In this case, mobile stations may have the functions of the base stations described above. The words such as "uplink" and "downlink" may be interpreted as the words corresponding to the terminal-to-terminal communication (for example, "side"). For example, an uplink channel, a downlink channel and so on may be interpreted as a sidelink channel (or sidelink).

Likewise, the mobile station in the present disclosure may be interpreted as base station. In this case, the base station may have the functions of the mobile station described above.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot," a "mini-slot," or the like, instead of a "subframe."

Here, a TTI refers to the minimum time unit of scheduling in radio communication, for example. For example, in LTE systems, a base station performs, for user terminals, scheduling of allocating radio resources (such as a frequency bandwidth and transmit power available for each user terminal) in TTI units. Note that the definition of the TTI is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot," or the like. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, or the like) may be interpreted as a TTI having a time length exceeding 1 ms, and a short TTI (for example, a shortened TTI or the like) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

An RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

A reference signal may be abbreviated as an "RS," and may be referred to as a "pilot," and so on, depending on which standard applies.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

"Means" included in the configuration of each of the above apparatuses may be replaced by "parts", "circuits", "devices", etc.

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

In the case where the terms "include", "including" and variations thereof are used in the present disclosure, these terms are intended to be comprehensive in the same way as the term "comprising". Further, the term "or" used in the present specification is not intended to be an "exclusive or".

In the present disclosure, where an article is added by translation, for example "a", "an", and "the", the disclosure may include that the noun following these articles is plural.

As used herein, the term "determining" may encompasses a wide variety of actions. For example, "determining" may be regarded as judging, calculating, computing, processing, deriving, investigating, looking up (e.g., looking up in a table, a database or another data structure), ascertaining and the like. Also, "determining" may be regarded as receiving (e.g., receiving information), transmitting (e.g., transmitting information), inputting, outputting, accessing (e.g., accessing data in a memory) and the like. Also, "determining" may be regarded as resolving, selecting, choosing, establishing and the like. That is, "determining" may be regarded as a certain type of action related to determining.

In this disclosure, the term "A and B are different" may mean "A and B are different from each other." It should be noted that the term "A and B are different" may mean "A and B are different from C." Terms such as "separated" or "combined" may be interpreted in the same way as the above-described "different".

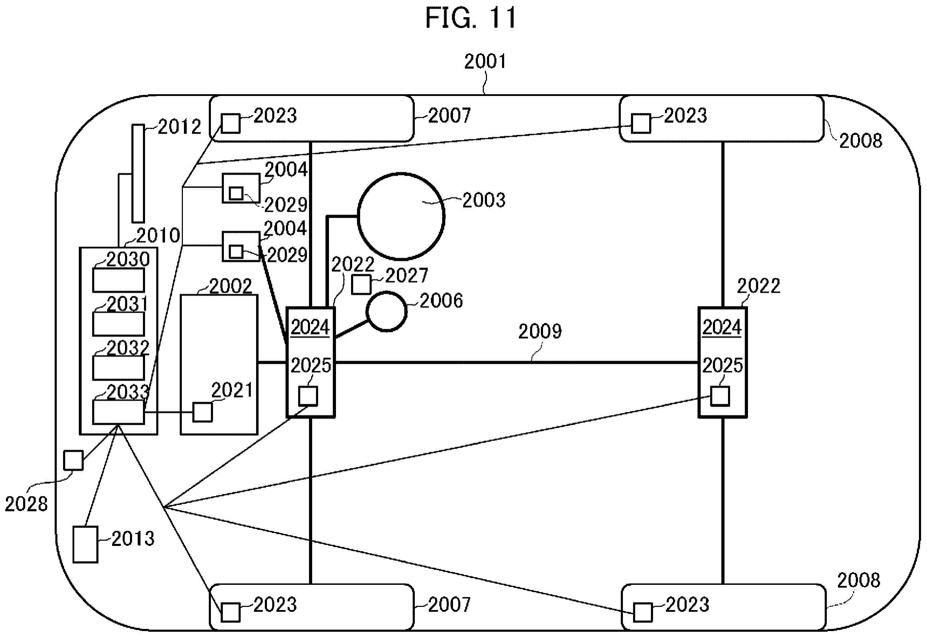

FIG. 11 shows a configuration example of a vehicle 2001. As shown in FIG. 11, the vehicle 2001 includes a drive unit 2002, a steering unit 2003, an accelerator pedal 2004, a brake pedal 2005, a shift lever 2006, left and right front wheels 2007, left and right rear wheels 2008, an axle 2009, an electronic control unit 2010, various sensors 2021 to 2029, an information service unit 2012, and a communication module 2013.

The drive unit 2002 may include, for example, an engine, a motor, and a hybrid of an engine and a motor. The steering unit 2003 includes at least a steering wheel and is configured to steer at least one of the front wheel or the rear wheel, based on the operation of the steering wheel operated by the user. The electronic control unit 2010 includes a microprocessor 2031, a memory (ROM, RAM) 2032, and a communication port (IO port) 2033. The electronic control unit 2010 receives signals from the various sensors 2021-2027 provided in the vehicle. The electronic control unit 2010 may be referred to as an ECU (Electronic control unit).

The signals from the various sensors 2021 to 2028 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by an object detection sensor 2028, for detecting an obstacle, a vehicle, a pedestrian, and the like.

The information service unit 2012 includes various devices for providing various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 1 by using information obtained from the external device through the communication module 2013 or the like.

The information service unit 2012 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 1 via a communication port. For example, the communication module 2013 transmits and receives data via a communication port 2033, to and from the drive unit 2002, the steering unit 2003, the accelerator pedal 2004, the brake pedal 2005, the shift lever 2006, the left and right front wheels 2007, the left and right rear wheels 2008, the axle 2009, the microprocessor 2031 and the memory (ROM, RAM) 2032 in the electronic control unit 2010, and sensors 2021 to 2028 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 may transmit at least one of signals from the various sensors 2021 to 2028 described above input to the electronic control unit 2010, information obtained based on the signals, and information based on an input from the outside (a user) obtained via the information service unit 2012, to the external apparatus via radio communication. The electronic control unit 2010, the various sensors 2021 to 2028, the information service unit 2012, and the like may be referred to as input units that receive input. For example, the PUSCH transmitted by the communication module 2013 may include information based on the input.

The communication module 2013 receives various types of information (traffic information, signal information, inter-vehicle information, etc.) transmitted from the external devices and displays the received information on the information service unit 2012 provided in the vehicle. In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the left and right front wheels 2007, the left and right rear wheels 2008, the axle 2009, the sensors 2021-2028, etc., mounted in the vehicle 2001.

Although the present disclosure has been described in detail above, it will be obvious to those skilled in the art that the present disclosure is not limited to the embodiments described in the present disclosure. The present disclosure can be implemented as modifications and variations without departing from the spirit and scope of the present disclosure as defined by the claims. Therefore, the description of the present disclosure is for the purpose of illustration, and does not have any restrictive meaning to the present disclosure.

### (Supplementary notes)

The above disclosure may be expressed as follows. A first feature provides a terminal including: a reception unit that receives broadcast information including access restrictions to a cell for a first type of terminal of which a capability is reduced compared to a capability of a normal terminal, and a second type of terminal of which a capability is further reduced compared to the capability of the first type of terminal; and a control unit that performs cell selection based on content of the access restrictions, in which the control unit ignores the access restriction for the first type of terminal, when the access restriction for the second type of terminal is indicated using the broadcast information.

In the first feature, a second feature provides the terminal in which: the control unit ignores the access restriction for the first type of terminal, regardless of whether the access restriction for the second type of terminal is indicated using the broadcast information.

A third feature provides a terminal including: a reception unit that receives broadcast information including first access restriction to a cell for a first type of terminal of which a capability is reduced compared to a capability of a normal terminal, and second access restriction to a cell for a second type of terminal of which a capability is further reduced compared to the capability of the first type of terminal; and a control unit that performs cell selection based on the first access restriction and the second access restriction, in which when access to the second type of terminal is restricted by the second access restriction, the control unit assumes that access to the first type of terminal is also restricted.

### Reference Signs List

10 Radio communication system
20 NG-RAN
100 gNB
110 Radio communication unit
120 Xn processing unit
130 RRC processing unit
140 Control unit
200 UE
210 Radio communication unit
220 RRC processing unit
230 Handover processing unit
240 Control unit
1001 Processor
1002 Memory
1003 Storage
1004 Communication device
1005 Input device
1006 Output device
1007 Bus
2001 Vehicle
2002 Drive unit
2003 Steering unit
2004 Accelerator pedal
2005 Brake pedal
2006 Shift lever
2007 Left and right front wheels
2008 Left and right rear wheels
2009 Axle
2010 Electronic control unit
2012 Information service unit
2013 Communication module
2021 Current sensor
2022 Revolution sensor
2023 Pneumatic sensor
2024 Vehicle speed sensor
2025 Acceleration sensor
2026 Brake pedal sensor
2027 Shift lever sensor
2028 Object detection sensor
2029 Accelerator pedal sensor
2030 Driving support system unit
2031 Microprocessor
2032 Memory (ROM, RAM)
2033 Communication port

## Claims

1. A terminal comprising:
a reception unit that receives broadcast information including access restrictions to a cell for a first type of terminal of which a capability is reduced compared to a capability of a normal terminal, and a second type of terminal of which a capability is further reduced compared to the capability of the first type of terminal; and
a control unit that performs cell selection based on content of the access restrictions, wherein
the control unit ignores the access restriction for the first type of terminal, when the access restriction for the second type of terminal is indicated using the broadcast information.

2. The terminal according to claim 1, wherein
the control unit ignores the access restriction for the first type of terminal, regardless of whether the access restriction for the second type of terminal is indicated using the broadcast information.

3. A terminal comprising:
a reception unit that receives broadcast information including first access restriction to a cell for a first type of terminal of which a capability is reduced compared to a capability of a normal terminal, and second access restriction to a cell for a second type of terminal of which a capability is further reduced compared to the capability of the first type of terminal; and
a control unit that performs cell selection based on the first access restriction and the second access restriction, wherein
the control unit assumes that access to the first type of terminal is also restricted, when access to the second type of terminal is restricted by the second access restriction.

4. A radio communication method performed by a terminal comprising:
a step of receiving broadcast information including access restrictions to a cell for a first type of terminal of which a capability is reduced compared to a capability of a normal terminal, and a second type of terminal of which a capability is further reduced compared to the capability of the first type of terminal;
a step of performing cell selection based on content of the access restriction; and
a step of ignoring the access restriction for the first type of terminal, when the access restriction for the second type of terminal is indicated using the broadcast information.

5. A radio communication method performed by a terminal comprising:
a step of receiving broadcast information including first access restriction to a cell for a first type of terminal of which a capability is reduced compared to a capability of a normal terminal, and second access restriction to a cell for a second type of terminal of which a capability is further reduced compared to the capability of the first type of terminal;
a step of performing cell selection based on the first access restriction and the second access restriction; and
a step of assuming that access to the first type of terminal is also restricted, when access to the second type of terminal is restricted by the second access restriction.
